# EUROPÄISCHE PATENTSCHRIFT

(11) **EP 3 660 445 B1**
(45) Veröffentlichungstag und Bekanntmachung des Hinweises auf die Patenterteilung: **18.08.2021**
(21) Anmeldenummer: 19200139.4
(22) Anmeldetag: 27.09.2019
(51) Int. Cl.: G01B 5/00

(54) **KLEMMVORRICHTUNG**
CLAMPING DEVICE
DISPOSITIF DE SERRAGE

(30) Priorität: 28.11.2018 DE 102018220437
(43) Veröffentlichungstag der Anmeldung: 03.06.2020
(73) Patentinhaber: Dr. Johannes Heidenhain GmbH, 83301 Traunreut (DE)
(72) Erfinder: SCHOPF, Reinhold, 83308 Trostberg (DE)

(56) Entgegenhaltungen:
- DE-A1-102016 219 714
- JP-A- S63 318 305
- US-A- 4 848 953

## Beschreibung

### GEBIET DER TECHNIK

Die vorliegende Erfindung betrifft eine Klemmvorrichtung zum Befestigen eines Messtasters, insbesondere eines Längenmesstasters, an einem Träger.

### STAND DER TECHNIK

Eine gattungsgemäße Klemmvorrichtung ist aus DE 10 2016 219 714 A1 bekannt. Die Klemmvorrichtung besteht aus einer Klemmhülse zum Umgreifen des Tasterschaftes eines Längenmesstasters. Die Klemmhülse weist eine Anordnung mehrerer über den Umfang verteilter und axial verlaufender Biegebalken auf, die mit Hilfe einer Spannvorrichtung gegen den Tasterschaft bewegbar sind. Die Spannvorrichtung besteht aus einer Anordnung von Schalen über den Umfang der Klemmhülse verteilt und hinsichtlich ihres Durchmessers mittels einer Schraube derart verstellbar, dass diese eine nach innen gerichtete Radialkraft auf die Klemmhülse ausübt und dadurch die Biegebalken gegen den Tasterschaft bewegt.

Ein Nachteil bekannter Klemmvorrichtungen ist es, dass die Klemmkraft in Abhängigkeit der Temperatur nicht konstant ist. Vielmehr ist sie Temperaturschwankungen unterworfen. Dies führt dazu, dass die Klemmung des Tasterschaftes nach einer gewissen Zeit nicht mehr ausreichend sicher ist. Infolge der Temperaturschwankungen kann insbesondere ein Nachlassen oder sogar ein Verlust der Klemmkraft erfolgen.

JP S63 318305 A offenbart eine Klemmvorrichtung nach dem Oberbegriff des Anspruchs 1.

### ZUSAMMENFASSUNG DER ERFINDUNG

Der vorliegenden Erfindung liegt die Aufgabe zugrunde, eine Klemmvorrichtung anzugeben, mit der unabhängig von Temperaturschwankungen ein sicheres Klemmen bzw. Spannen des Schaftes eines Messtasters ermöglicht wird.

Diese Aufgabe wird erfindungsgemäß durch eine Klemmvorrichtung mit den Merkmalen des Anspruchs 1 gelöst.

Die erfindungsgemäß ausgebildete Klemmvorrichtung umfasst eine Klemmhülse zum Umgreifen eines Schaftes des Messtasters, wobei die Klemmhülse derart elastisch verformbar ist, dass sie gegen den Schaft des Messtasters andrückbar ist. Die Klemmvorrichtung umfasst weiterhin ein erstes Verbindungselement, das die Klemmhülse derart umgibt, dass zumindest entlang eines Längsabschnitts der Klemmvorrichtung zwischen der Klemmhülse und dem ersten Verbindungselement ein hohlzylinderförmiger Zwischenraum gebildet wird. Die Klemmvorrichtung umfasst weiterhin ein zweites Verbindungselement, wobei das erste Verbindungselement und das zweite Verbindungselement drehbar aneinander befestigt sind. Die Klemmvorrichtung umfasst weiterhin ein Gleitringelement, das zwischen der Klemmhülse und dem ersten Verbindungselement einerseits und zwischen dem hohlzylinderförmigen Zwischenraum und einem Druckbeaufschlagungsteil der Klemmvorrichtung anderseits angeordnet ist. Die Klemmvorrichtung umfasst weiterhin ein Kompressionselement, das in den hohlzylinderförmigen Zwischenraum eingebracht ist. Die Klemmvorrichtung ist derart ausgebildet, dass bei einem Verdrehen der beiden Verbindungselemente relativ zueinander das Druckbeaufschlagungsteil eine in Richtung des Kompressionselements gerichtete Axialkraft auf das Gleitringelement ausübt und dadurch das Gleitringelement gegen das Kompressionselement bewegt, wodurch die Axialkraft auf das Kompressionselement übertragen wird. Das Kompressionselement ist derart ausgebildet, dass es bei einem Erfahren der Axialkraft eine in Richtung des Schaftes des Messtasters gerichtete Radialkraft auf die Klemmhülse ausübt und dadurch die Klemmhülse gegen den Schaft des Messtasters andrückt. Das Kompressionselement hat einen thermischen Ausdehnungskoeffizienten, der derart an die thermischen Ausdehnungskoeffizienten der Klemmhülse und des ersten Verbindungselements angepasst ist, dass eine durch eine Temperaturänderung bedingte Änderung der Radialkraft vermieden oder zumindest verringert wird.

Die Radialkraft kann auch als Klemmkraft oder Spannkraft bezeichnet werden.

Durch die Anpassung des thermischen Ausdehnungskoeffizienten des Kompressionselements an diejenigen der Klemmhülse und des ersten Verbindungselements kann die Klemmkraft bzw. Spannkraft auch bei einer Temperaturänderung im Wesentlichen konstant gehalten oder beibehalten werden. Dadurch wird unabhängig von Temperaturschwankungen ein sicheres Klemmen bzw. Spannen des Schaftes des Messtasters erreicht.

Das Kompressionselement hat einen thermischen Längenausdehnungskoeffizienten im Bereich von 8 bis 25 x 10⁻⁶K⁻¹, vorzugsweise etwa 8.5 x 10⁻⁶K⁻¹. Die Klemmhülse, das erste Verbindungselement, das zweite Verbindungselement und/oder das Gleitringelement haben einen thermischen Längenausdehnungskoeffizienten im Bereich von 8 bis 25 x 10⁻⁶K⁻¹, vorzugsweise etwa 10 x 10⁻⁶K⁻¹. Infolgedessen hat das Kompressionselement einen vergleichbaren oder ähnlichen thermischen Längenausdehnungskoeffizienten wie die anderen Bauteile der Klemmvorrichtung, insbesondere die Klemmhülse, das erste Verbindungselement, das zweite Verbindungselement und/oder das Gleitringelement.

Hierzu umfasst das Kompressionselement Glasfaser-Roving, Glaspulver, Glaskugeln, Stahldraht, Stahlpulver, Stahlkugeln oder einen Kunststoff mit einem bestimmten Glasfaseranteil, während die Klemmhülse, das erste Verbindungselement, das zweite Verbindungselement und/oder das Gleitringelement vorzugsweise aus Stahl oder alternativ dazu aus Messing oder Aluminium gefertigt sind.

Eine Messanordnung mit einem Messtaster, insbesondere einem Längenmesstaster, einem Träger und einer erfindungsgemäß ausgebildeten Klemmvorrichtung ist im Anspruch 11 angegeben.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen Klemmvorrichtung ergeben sich aus der nachfolgenden Beschreibung eines Ausführungsbeispiels anhand der beiliegenden Figuren.

Es zeigen
- Fig. 1: einen Längenmesstaster und eine erfindungsgemäß ausgebildete Klemmvorrichtung einer Messanordnung;
- Fig. 2: eine Messanordnung mit dem Längenmesstaster und der Klemmvorrichtung nach Figur 1, wobei der Längenmesstaster durch die Klemmvorrichtung an einem Träger befestigt ist;
- Fig. 3: eine perspektivische Ansicht der Klemmvorrichtung;
- Fig. 4: einen Längsschnitt der Klemmvorrichtung mit einem Kompressionselement, das ein Fasern umfassendes Material aufweist;
- Fig. 5: die Klemmvorrichtung in einer Explosionsansicht; und
- Fig. 6: einen Längsschnitt einer Anordnung des Trägers und der Klemmvorrichtung, die an dem Träger befestigt ist.

### BESCHREIBUNG DER AUSFÜHRUNGSFORMEN

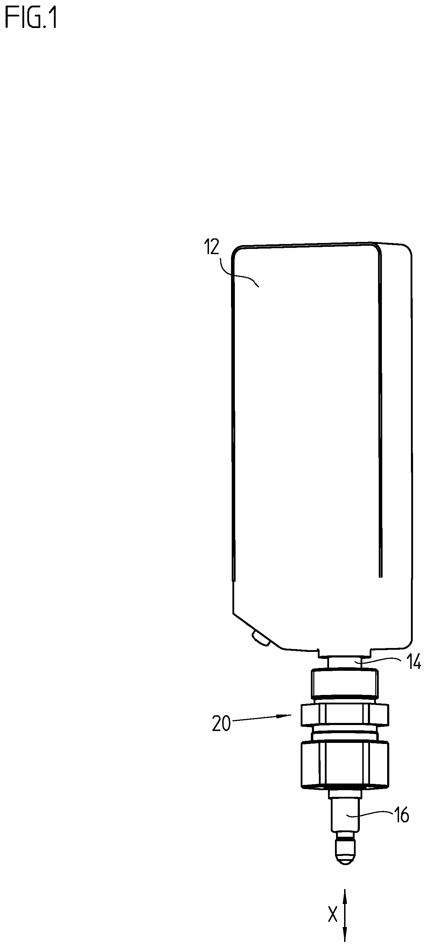

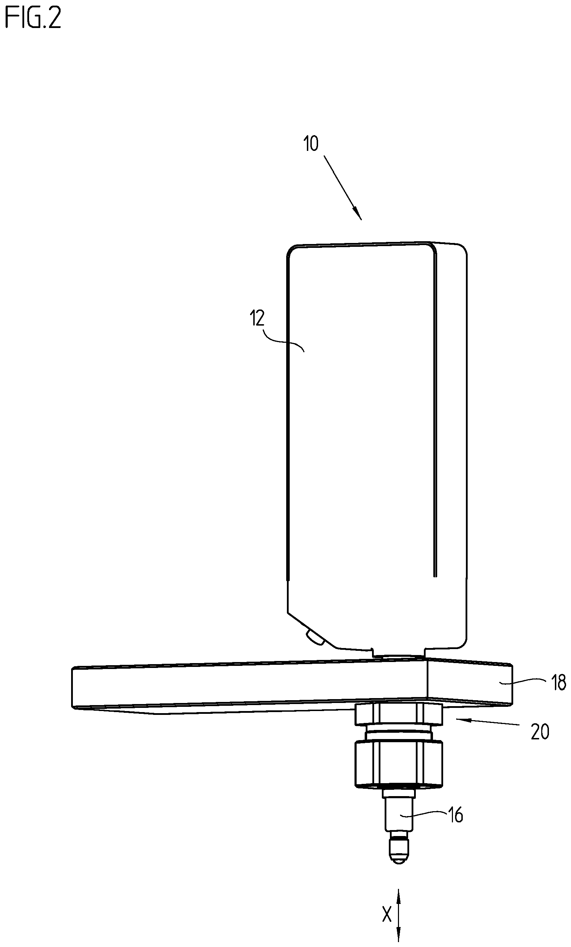

Die Erfindung wird anhand der Figuren 1 bis 6 am Beispiel einer Messanordnung 10 erläutert, die einen Längenmesstaster 12 mit einem Schaft 14 und einen darin in Längsrichtung X geführten Taststift 16 umfasst. Zum Messbetrieb ist der Längenmesstaster 12 an einem stationären Träger 18 befestigt, indem der Schaft 14 des Längenmesstasters 12 durch eine erfindungsgemäße Klemmvorrichtung 20 umfangsmäßig geklemmt ist. Die Klemmvorrichtung 20 ist dazu ausgebildet, den Schaft 14 des Längenmesstasters 12 einerseits ortsfest am Träger 18 zu halten und andererseits auf den Schaft 14 des Längenmesstasters 12 über den Umfang eine in Abhängigkeit der Temperatur im Wesentlichen konstante Klemmkraft bzw. Spannkraft auszuüben.

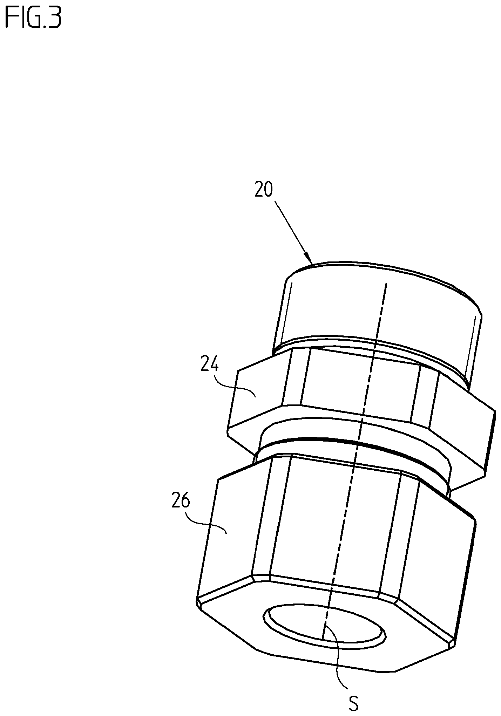

Die Klemmvorrichtung 20 wird nachfolgend anhand der Figuren 3 bis 5 näher erläutert. Die Klemmvorrichtung 20 umfasst eine Klemmhülse 22, ein erstes Verbindungselement 24, ein zweites Verbindungselement 26, ein Gleitringelement 34 und ein Kompressionselement 38.

Die Klemmhülse 22 dient zum Umgreifen des Schaftes 14 des Längenmesstasters 12. Die Klemmhülse 22 ist derart elastisch verformbar, dass sie gegen den Schaft 14 des Längenmesstasters 12 andrückbar ist. Das erste Verbindungselement 24 umgibt die Klemmhülse 22 derart, dass zumindest entlang eines Längsabschnitts der Klemmvorrichtung 20 zwischen der Klemmhülse 22 und dem ersten Verbindungselement 24 ein hohlzylinderförmiger Zwischenraum 28 gebildet wird. Das zweite Verbindungselement 26 ist an einem Ende des ersten Verbindungselements 24 drehbar befestigt. Das Gleitringelement 34 ist an einem dem zweiten Verbindungselement 26 zugewandten Ende der Klemmhülse 22 zwischen der Klemmhülse 22 und dem ersten Verbindungselement 24 einerseits und zwischen dem hohlzylinderförmigen Zwischenraum 28 und einem Druckbeaufschlagungsteil 36 der Klemmvorrichtung 20 andererseits angeordnet. Das Druckbeaufschlagungsteil 36 ist ein hohlzylinderförmiger Abschnitt des zweiten Verbindungselements 26, der an einer dem hohlzylinderförmigen Zwischenraum 28 gegenüberliegenden Seite an das Gleitringelement 34 angrenzt. Das Kompressionselement 38 ist in den hohlzylinderförmigen Zwischenraum 28 eingebracht.

Das erste Verbindungselement 24 ist ein im Wesentlichen hohlzylinderförmiges Gehäuseteil. Das zweite Verbindungselement 26 ist eine mit dem ersten Verbindungselement 24 verschraubbare Mutter. Zum Verschrauben hat das erste Verbindungselement 24 ein an dem dem zweiten Verbindungselement 26 zugewandten Ende des ersten Verbindungselements 24 vorgesehenes erstes Außengewinde 30.1, das mit einem Innengewinde 32 des zweiten Verbindungselements 26 in Eingriff steht. Das erste Verbindungselement 24 kann an einem dem zweiten Verbindungselement 26 abgewandten Ende des ersten Verbindungselements 24 mit einem oberen Randabschnitt der Klemmhülse 22 verschraubt sein. Die Klemmhülse 22 kann alternativ auch ohne Verschrauben in das erste Verbindungselement 24 eingesetzt sein.

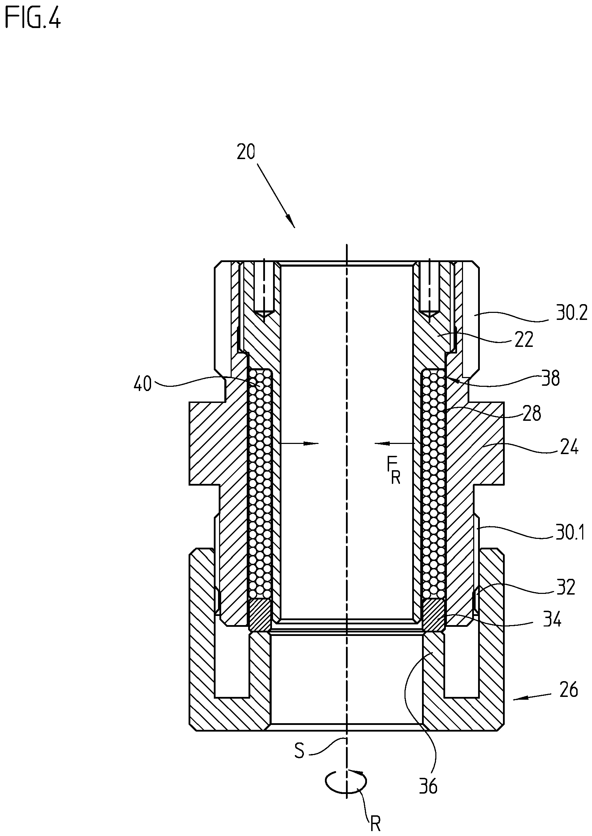

Der Montagezustand der Klemmvorrichtung 20 ist insbesondere in Figur 4 dargestellt. Die Klemmvorrichtung 20 ist derart ausgebildet, dass bei einem Verdrehen des zweiten Verbindungselements 26 relativ zum ersten Verbindungselement 24 das Druckbeaufschlagungsteil 36 eine in Richtung des Kompressionselements 38 gerichtete Axialkraft auf das Gleitringelement 34 ausübt und dadurch das Gleitringelement 34 gegen das Kompressionselement 38 bewegt, wodurch die Axialkraft auf das Kompressionselement 38 übertragen wird. Das Kompressionselement 38 ist derart ausgebildet, dass es bei einem Erfahren der Axialkraft eine in Richtung des Schaftes 14 des Längenmesstasters 12 gerichtete Radialkraft F_{R} auf die Klemmhülse 22 ausübt und dadurch die Klemmhülse 22 gegen den Schaft 14 des Längenmesstasters 12 andrückt. Erfindungsgemäß hat das Kompressionselement 38 einen thermischen Ausdehnungskoeffizienten, der derart an die thermischen Ausdehnungskoeffizienten der Klemmhülse 22 und des ersten Verbindungselements 24 angepasst ist, dass eine durch eine Temperaturänderung bedingte Änderung der Radialkraft F_{R} vermieden oder zumindest verringert wird. Dadurch wird erreicht, dass die Klemmvorrichtung 20 unempfindlich gegen Temperaturschwankungen ist.

Das Kompressionselement 38 weist ein Fasern 40, vorzugsweise Glasfasern, umfassendes Material auf. Vorzugsweise hat das Kompressionselement 38 somit den thermischen Längenausdehnungskoeffizienten 8,5 x 10⁻⁶K⁻¹. Die Klemmhülse 22 und das erste Verbindungselement 24 sind vorzugsweise aus Stahl mit dem thermischen Längenausdehnungskoeffizienten 10 x 10⁻⁶ K⁻¹ gefertigt. Ferner können auch das zweite Verbindungselement 26 und das Gleitringelement 34 aus Stahl mit demselben thermischen Längenausdehnungskoeffizienten gefertigt sein. Infolgedessen hat das Kompressionselement 38 einen vergleichbaren oder ähnlichen thermischen Längenausdehnungskoeffizienten wie zumindest die Klemmhülse 22 und das erste Verbindungselement 24. Dies ist gegenüber dem Einsatz einer Hydraulikflüssigkeit, wie beispielsweise eines Hydrauliköls, als Kompressionselement von Vorteil, da die Hydraulikflüssigkeit im Vergleich zu Stahl typischerweise einen viel größeren thermischen Längenausdehnungskoeffizienten hat. In diesem Fall wäre die Unempfindlichkeit gegen Temperaturschwankungen der Klemmvorrichtung 20 nicht mehr gegeben.

In vorteilhafter Weise ist das Kompressionselement 38 ein aus Glasfaser-Roving hergestellter Wickelkörper. Dadurch kann das Kompressionselement 38 zu einem gewissen Grad kompressibel ausgebildet sein, wodurch bei einer Druckbeaufschlagung in axialer Richtung die Radialkraft F_{R} bewirkt wird.

Das Kompressionselement 38 ist in vorteilhafter Weise zudem reversibel verformbar. Beim Verdrehen des zweiten Verbindungselements 26 relativ zum ersten Verbindungselement 24 in eine erste Drehrichtung wechselt es von einem ersten Verformungszustand in einen zweiten Verformungszustand. Beim Verdrehen des zweiten Verbindungselements 26 relativ zum ersten Verbindungselement 24 in eine zur ersten Drehrichtung entgegengesetzte zweite Richtung wechselt es wieder vom zweiten Verformungszustand in den ersten Verformungszustand. Das Verdrehen erfolgt dabei um die Rotationsachse S, wie es in Figur 4 durch den Pfeil R angedeutet ist.

Durch die reversible Verformbarkeit des Kompressionselements 38 wird ein Feststopfen des Fasermaterials verhindert. Somit bleibt beim Lösen der Verbindung zwischen dem ersten Verbindungselement 24 und dem zweiten Verbindungselement 26 die Radialkraft F_{R} nicht erhalten, so dass der Schaft 14 des Längenmesstasters 12 wieder freigebbar ist.

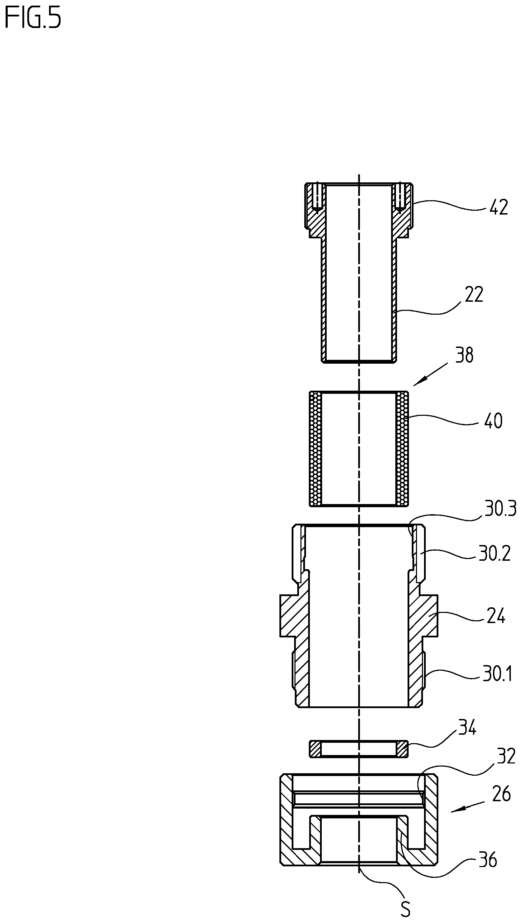

In der Explosionsansicht der Figur 5 sind die einzelnen Bauteile der Klemmvorrichtung 20 dargestellt. Zur Montage bzw. Herstellung der Klemmvorrichtung 20 erfolgen die folgenden Schritte. Es wird das erste Verbindungselement 24 bereitgestellt, das am unteren Ende das erste Außengewinde 30.1 und am oberen Ende ein zweites Außengewinde 30.2 und ein Innengewinde 30.3 aufweist. Es wird zudem die Klemmhülse 22 bereitgestellt, die am oberen Randabschnitt ein Außengewinde 42 aufweist. Die Klemmhülse 22 wird in das erste Verbindungselement 24 eingesetzt und durch die miteinander in Eingriff stehenden Gewinde 42 und 30.3 verschraubt. Das die Fasern 40 enthaltende Kompressionselement 38 wird in vorteilhafter Weise unabhängig von der Klemmhülse 22 als separates Element zur Verfügung gestellt. Das Kompressionselement 38 wird zwischen die Klemmhülse 22 und das erste Verbindungselement 24 eingebracht. Es werden zudem das Gleitringelement 34 und das zweite Verbindungselement 26 bereitgestellt. Das zweite Verbindungselement 26 weist das Druckbeaufschlagungsteil 36 auf. Das erste Verbindungselement 24 und das zweite Verbindungselement 26 werden durch die miteinander in Eingriff stehenden Gewinde 30.1 und 32 verschraubt. Dabei wird das Gleitringelement 34 einerseits zwischen die Klemmhülse 22 und das erste Verbindungselement 24 eingebracht und andererseits durch das Druckbeaufschlagungsteil 36 gegen das Kompressionselement 38 bewegt.

Durch das Bereitstellen des Kompressionselements 38 als separates Element wird die Montage vereinfacht. Das Kompressionselement 38 kann alternativ auch durch direkt auf die Klemmhülse 22 gewickelte Fasern 40 gebildet sein.

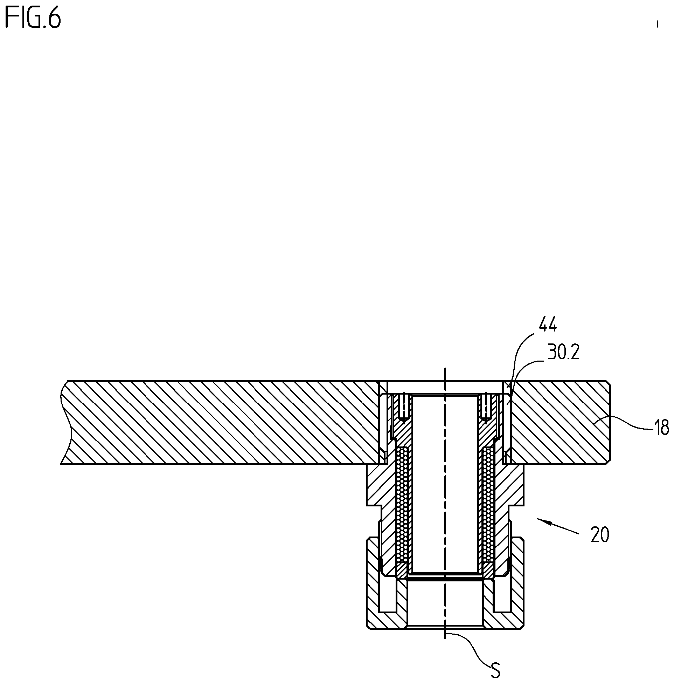

Figur 6 zeigt einen Längsschnitt einer Anordnung des Trägers 18 und der Klemmvorrichtung 20, die an dem Träger 18 befestigt ist. Zur Befestigung dient das am oberen Ende der Klemmvorrichtung 20 vorgesehene zweite Außengewinde 30.2, das mit einem Innengewinde 44 einer Durchgangsbohrung des Trägers 18 in Eingriff gebracht werden kann.

Die erfindungsgemäße Klemmvorrichtung 20 hat gegenüber konventionellen hydraulischen Klemm- bzw. Spannelementen, wie beispielsweise einem Hydrodehnspannfutter, die folgenden Vorteile. Es erfolgt keine Schwankung der Klemm- bzw. Spannkraft bei Temperaturwechselzyklen. Die Klemmvorrichtung 20 ist flüssigkeitsfrei. Somit kann sie nicht undicht werden und damit ihre Klemm- bzw. Spannkraft verlieren. Es gibt keine Gefahr der Kontamination der Umgebung bei einer Undichtigkeit des Systems. Die Klemmvorrichtung 20 ist daher auch in steriler Umgebung einsetzbar. Die Klemmvorrichtung 20 ist zudem vakuumgeeignet und hochtemperaturgeeignet. Im Gegensatz zu hydraulischen Systemen ist die Klemmvorrichtung 20 für Temperaturen ausgelegt, die viel höher als 150 °C sind.

### Bezugszeichenliste

- 10: Messanordnung
- 12: Längenmesstaster
- 14: Schaft
- 16: Taststift
- 18: Träger
- 20: Klemmvorrichtung
- 22: Klemmhülse
- 24: Verbindungselement
- 26: Verbindungselement
- 28: hohlzylinderförmiger Zwischenraum
- 30.1: Außengewinde
- 30.2: Außengewinde
- 30.3: Innengewinde
- 32: Innengewinde
- 34: Gleitringelement
- 36: Druckbeaufschlagungsteil
- 38: Kompressionselement
- 40: Fasern
- 42: Außengewinde
- 44: Innengewinde
- F_{R}: Radialkraft
- R: Pfeil
- S: Rotationsachse
- X: Längsrichtung

## Patentansprüche

1. Klemmvorrichtung (20) zum Befestigung eines Messtasters, insbesondere eines Längenmesstasters (12), an einem Träger (18), mit
einer Klemmhülse (22) zum Umgreifen eines Schaftes (14) des Messtasters, wobei die Klemmhülse (22) derart elastisch verformbar ist, dass sie gegen den Schaft (14) des Messtasters andrückbar ist,
einem ersten Verbindungselement (24), das die Klemmhülse (22) derart umgibt, dass zumindest entlang eines Längsabschnitts der Klemmvorrichtung (20) zwischen der Klemmhülse (22) und dem ersten Verbindungselement (24) ein hohlzylinderförmiger Zwischenraum (28) gebildet wird,
einem zweiten Verbindungselement (26), wobei das erste Verbindungselement (24) und das zweite Verbindungselement (26) drehbar aneinander befestigt sind,
einem Gleitringelement (34), das zwischen der Klemmhülse (22) und dem ersten Verbindungselement (24) einerseits und zwischen dem hohlzylinderförmigen Zwischenraum (28) und einem Druckbeaufschlagungsteil (36) der Klemmvorrichtung (20) andererseits angeordnet ist, und
einem Kompressionselement (38), das in den hohlzylinderförmigen Zwischenraum (28) eingebracht ist,
wobei die Klemmvorrichtung (20) derart ausgebildet ist, dass bei einem Verdrehen der beiden Verbindungselemente (24, 26) relativ zueinander das Druckbeaufschlagungsteil (36) eine in Richtung des Kompressionselements (38) gerichtete Axialkraft auf das Gleitringelement (34) ausübt und dadurch das Gleitringelement (34) gegen das Kompressionselement (38) bewegt, wodurch die Axialkraft auf das Kompressionselement (38) übertragen wird,
wobei das Kompressionselement (38) derart ausgebildet ist, dass es bei einem Erfahren der Axialkraft eine in Richtung des Schaftes (14) des Messtasters gerichtete Radialkraft (F_{R}) auf die Klemmhülse (22) ausübt und dadurch die Klemmhülse (22) gegen den Schaft (14) des Messtasters andrückt, und
wobei das Kompressionselement (38) einen thermischen Ausdehnungskoeffizienten hat, der derart an die thermischen Ausdehnungskoeffizienten der Klemmhülse (22) und des ersten Verbindungselements (24) angepasst ist, dass eine durch eine Temperaturänderung bedingte Änderung der Radialkraft (F_{R}) vermieden oder zumindest verringert wird,
**dadurch gekennzeichnet, dass** das Kompressionselement (38) einen thermischen Längenausdehnungskoeffizienten im Bereich von 8 bis 25 x 10⁻⁶K⁻¹ hat,
dass die Klemmhülse (22), das erste Verbindungselement (24), das zweite Verbindungselement (26) und/oder das Gleitringelement (34) einen thermischen Längenausdehnungskoeffizienten im Bereich von 8 bis 25 x 10⁻⁶K⁻¹ haben, und
dass das Kompressionselement (38) Glasfaser-Roving, Glaspulver, Glaskugeln, Stahldraht, Stahlpulver, Stahlkugeln oder einen Kunststoff mit einem bestimmten Glasfaseranteil umfasst.

2. Klemmvorrichtung (20) nach Anspruch 1, wobei das Kompressionselement (38) ein unabhängig von der Klemmhülse (22) aus Fasern (40) hergestellter Wickelkörper ist oder durch auf die Klemmhülse (22) gewickelte Fasern gebildet ist.

3. Klemmvorrichtung (20) nach Anspruch 1 oder 2, wobei das Kompressionselement (38) ein elastisch verformbares Festkörperelement ist.

4. Klemmvorrichtung (20) nach einem der vorhergehenden Ansprüche, wobei das Kompressionselement (38) derart reversibel verformbar ist, dass es beim Verdrehen des zweiten Verbindungselements (26) relativ zum ersten Verbindungselement (24) in eine erste Drehrichtung von einem ersten Verformungszustand in einen zweiten Verformungszustand wechselt, und dass es beim Verdrehen des zweiten Verbindungselements (26) relativ zum ersten Verbindungselement (24) in eine zur ersten Drehrichtung entgegengesetzte zweite Drehrichtung wieder vom zweiten Verformungszustand in den ersten Verformungszustand wechselt.

5. Klemmvorrichtung (20) nach einem der vorhergehenden Ansprüche, wobei das erste Verbindungselement (24) ein Bauteil mit Außengewinde und das zweite Verbindungselement (26) ein Bauteil mit Innengewinde sind.

6. Klemmvorrichtung (20) nach einem der vorhergehenden Ansprüche, wobei das erste Verbindungselement (24) ein an einem dem zweiten Verbindungselement (26) zugewandten Ende des ersten Verbindungselements (24) vorgesehenes erstes Außengewinde (30.1) hat, das mit einem Innengewinde (32) des zweiten Verbindungselements (26) in Eingriff steht.

7. Klemmvorrichtung (20) nach einem der vorhergehenden Ansprüche, wobei das erste Verbindungselement (24) ein an einem dem zweiten Verbindungselement (26) abgewandten Ende des ersten Verbindungselements (24) vorgesehenes zweites Außengewinde (30.2) hat, das derart ausgebildet ist, dass es mit einem Innengewinde (44) einer Durchgangsbohrung des Trägers (18) in Eingriff gebracht werden kann.

8. Klemmvorrichtung (20) nach einem der vorhergehenden Ansprüche, wobei das Druckbeaufschlagungsteil (36) einstückig mit dem zweiten Verbindungselement (26) gebildet ist.

9. Klemmvorrichtung (20) nach einem der vorhergehenden Ansprüche, wobei der hohlzylinderförmige Zwischenraum (28) flüssigkeitsfrei ist.

10. Klemmvorrichtung (20) nach einem der vorhergehenden Ansprüche, wobei die Klemmhülse (22), das erste Verbindungselement (24), das zweite Verbindungselement (26) und/oder das Gleitringelement (34) aus Stahl, Messing oder Aluminium gefertigt sind.

11. Messanordnung (10) mit einem Messtaster, insbesondere einem Längenmesstaster (12), einem Träger (18) und einer Klemmvorrichtung (20) nach einem der vorhergehenden Ansprüche.

## Claims

1. Clamping device (20) for fastening a measuring probe, in particular a length measuring probe (12), to a carrier (18), having
a clamping sleeve (22) for engaging around a shank (14) of the measuring probe, wherein the clamping sleeve (22) is elastically deformable such that it is able to be pressed against the shank (14) of the measuring probe,
a first connecting element (24) that surrounds the clamping sleeve (22) such that a hollow-cylindrical intermediate space (28) is formed between the clamping sleeve (22) and the first connecting element (24), at least along a longitudinal portion of the clamping device (20),
a second connecting element (26), wherein the first connecting element (24) and the second connecting element (26) are fastened to one another in a rotatable manner,
a sliding ring element (34) that is arranged, for the one part, between the clamping sleeve (22) and the first connecting element (24) and, for the other part, between the hollow-cylindrical intermediate space (28) and a pressurizing part (36) of the clamping device (20), and
a compression element (38) that has been introduced into the hollow-cylindrical intermediate space (28),
wherein the clamping device (20) is configured such that, when the two connecting elements (24, 26) are rotated relative to one another, the pressurizing part (36) exerts an axial force, directed in the direction of the compression element (38), on the sliding ring element (34) and as a result the sliding ring element (34) moves against the compression element (38) with the result that the axial force is transmitted to the compression element (38),
wherein the compression element (38) is configured such that, upon experiencing the axial force, it exerts a radial force (F_{R}), directed in the direction of the shank (14) of the measuring probe, on the clamping sleeve (22) and as a result presses the clamping sleeve (22) against the shank (14) of the measuring probe, and
wherein the compressing element (38) has a coefficient of thermal expansion which is matched to the coefficient of thermal expansion of the clamping sleeve (22) and of the first connecting element (24) such that a change in the radial force (F_{R}) caused by a change in temperature is avoided or at least reduced,
**characterized in that** the compression element (38) has a longitudinal coefficient of thermal expansion in the range from 8 to 25 x 10⁻⁶K⁻¹,
**in that** the clamping sleeve (22), the first connecting element (24), the second connecting element (26) and/or the sliding ring element (34) have a longitudinal coefficient of thermal expansion in the range from 8 to 25 x 10⁻⁶K⁻¹, and
**in that** the compression element (38) comprises glass fibre roving, glass powder, glass balls, steel wire, steel powder, steel balls or a plastic having a particular glass fibre content.

2. Clamping device (20) according to Claim 1, wherein the compression element (38) is a winding form produced from fibres (40) independently of the clamping sleeve (22) or is formed by fibres wound onto the clamping sleeve (22).

3. Clamping device (20) according to Claim 1 or 2, wherein the compressing element (38) is an elastically deformable solid body element.

4. Clamping device (20) according to one of the preceding claims, wherein the compression element (38) is reversibly deformable such that, when the second connecting element (26) is rotated in a first direction of rotation relative to the first connecting element (24), it changes from a first state of deformation into a second state of deformation, and such that, when the second connecting element (26) is rotated in a second direction of rotation opposite to the first direction of rotation relative to the first connecting element (24), it changes back from the second state of deformation into the first state of deformation.

5. Clamping device (20) according to one of the preceding claims, wherein the first connecting element (24) is a component with an external thread and the second connecting element (26) is a component with an internal thread.

6. Clamping device (20) according to one of the preceding claims, wherein the first connecting element (24) has a first external thread (30.1) provided at an end of the first connecting element (24) that faces the second connecting element (26), said first external thread (30.1) being engaged with an internal thread (32) of the second connecting element (26).

7. Clamping device (20) according to one of the preceding claims, wherein the first connecting element (24) has a second external thread (30.2) provided at an end of the first connecting element (24) that is remote from the second connecting element (26), said second external thread (30.2) being configured such that it can be brought into engagement with an internal thread (44) of a through-bore in the carrier (18).

8. Clamping device (20) according to one of the preceding claims, wherein the pressurizing part (36) is formed in one piece with the second connecting element (26).

9. Clamping device (20) according to one of the preceding claims, wherein the hollow-cylindrical intermediate space (28) is free of liquid.

10. Clamping device (20) according to one of the preceding claims, wherein the clamping sleeve (22), the first connecting element (24), the second connecting element (26) and/or the sliding ring element (34) are manufactured from steel, brass or aluminium.

11. Measuring arrangement (10) having a measuring probe, in particular a length measuring probe (12), a carrier (18) and a clamping device (20) according to one of the preceding claims.

## Revendications

1. Dispositif de serrage (20) servant à la fixation d'un palpeur de mesure, en particulier d'un palpeur de mesure de longueur (12), sur un support (18), comportant une douille de serrage (22) destinée à venir en prise autour d'une tige (14) du palpeur de mesure, la douille de serrage (22) étant déformable élastiquement de telle sorte qu'elle peut être pressée contre la tige (14) du palpeur de mesure,
un premier élément de liaison (24) qui entoure la douille de serrage (22) de telle sorte qu'un espace intermédiaire (28) de forme cylindrique creuse est formé au moins le long d'une partie longitudinale du dispositif de serrage (20) entre la douille de serrage (22) et le premier élément de liaison (24),
un deuxième élément de liaison (26), le premier élément de liaison (24) et le deuxième élément de liaison (26) étant fixés l'un à l'autre de manière rotative,
un élément annulaire de glissement (34) qui est disposé entre la douille de serrage (22) et le premier élément de liaison (24) d'une part et entre l'espace intermédiaire (28) de forme cylindrique creuse et une partie d'application de pression (36) du dispositif de serrage (20) d'autre part, et
un élément de compression (38) qui est introduit dans l'espace intermédiaire (28) de forme cylindrique creuse, le dispositif de serrage (20) étant réalisé de telle sorte que lors d'une rotation des deux éléments de liaison (24, 26) l'un par rapport à l'autre, la partie d'application de pression (36) exerce sur l'élément annulaire de glissement (34) une force axiale orientée en direction de l'élément de compression (38) et déplace ainsi l'élément annulaire de glissement (34) contre l'élément de compression (38), de sorte que la force axiale est transmise à l'élément de compression (38),
l'élément de compression (38) étant réalisé de telle sorte que lorsqu'il subit la force axiale, il exerce sur la douille de serrage (22) une force radiale (F_{R}) orientée en direction de la tige (14) du palpeur de mesure et presse ainsi la douille de serrage (22) contre la tige (14) du palpeur de mesure, et
l'élément de compression (38) ayant un coefficient de dilatation thermique qui est adapté aux coefficients de dilatation thermique de la douille de serrage (22) et du premier élément de liaison (24), de telle sorte qu'une force radiale (F_{R}) due à une variation de température est évitée ou au moins réduite,
**caractérisé en ce que** l'élément de compression (38) a un coefficient de dilatation thermique longitudinal dans la plage de 8 à 25 x 10⁻⁶K⁻¹, et
**en ce que** la douille de serrage (22), le premier élément de liaison (24), le deuxième élément de liaison (26) et/ou l'élément annulaire de glissement (34) ont un coefficient de dilatation thermique longitudinal dans la plage de 8 à 25 x 10⁻⁶K⁻¹, et
**en ce que** l'élément de compression (38) comporte un roving en fibre de verre, du verre pulvérisé, des billes de verre, un fil d'acier, de la poudre d'acier, des billes d'acier ou une matière synthétique présentant une proportion de fibres de verre déterminée.

2. Dispositif de serrage (20) selon la revendication 1, l'élément de compression (38) étant un corps obtenu par enroulement fabriqué à partir de fibres (40) indépendamment de la douille de serrage (22) ou étant formé par des fibres enroulées sur la douille de serrage (22) .

3. Dispositif de serrage (20) selon la revendication 1 ou 2, l'élément de compression (38) étant un élément solide déformable élastiquement.

4. Dispositif de serrage (20) selon l'une des revendications précédentes, l'élément de compression (38) étant déformable de manière réversible de telle sorte que lors d'une rotation du deuxième élément de liaison (26) par rapport au premier élément de liaison (24) dans un premier sens de rotation, il passe d'un premier état de déformation à un deuxième état de déformation, et de telle sorte que lors d'une rotation du deuxième élément de liaison (26) par rapport au premier élément de liaison (24) dans un deuxième sens de rotation opposé au premier sens de rotation, il passe à nouveau du deuxième état de déformation au premier état de déformation.

5. Dispositif de serrage (20) selon l'une des revendications précédentes, le premier élément de liaison (24) étant un composant doté d'un filetage extérieur et le deuxième élément de liaison (26) étant un composant doté d'un filetage intérieur.

6. Dispositif de serrage (20) selon l'une des revendications précédentes, le premier élément de liaison (24) ayant un premier filetage extérieur (30.1) prévu à une extrémité du premier élément de liaison (24) tournée vers le deuxième élément de liaison (26), lequel filetage extérieur est en prise avec un filetage intérieur (32) du deuxième élément de liaison (26).

7. Dispositif de serrage (20) selon l'une des revendications précédentes, le premier élément de liaison (24) ayant un deuxième filetage extérieur (30.2) prévu à une extrémité du premier élément de liaison (24) opposée au deuxième élément de liaison (26), lequel filetage extérieur est réalisé de telle sorte qu'il peut être amené en prise avec un filetage intérieur (44) d'un alésage traversant du support (18).

8. Dispositif de serrage (20) selon l'une des revendications précédentes, la partie d'application de pression (36) étant formée d'une seule pièce avec le deuxième élément de liaison (26).

9. Dispositif de serrage (20) selon l'une des revendications précédentes, l'espace intérieur (28) de forme cylindrique creuse étant dépourvu de liquide.

10. Dispositif de serrage (20) selon l'une des revendications précédentes, la douille de serrage (22), le premier élément de liaison (24), le deuxième élément de liaison (26) et/ou l'élément annulaire de glissement (34) étant fabriqués à partir d'acier, de laiton ou d'aluminium.

11. Ensemble de mesure (10) comportant un palpeur de mesure, en particulier un palpeur de mesure de longueur (12), un support (18) et un dispositif de serrage (20) selon l'une des revendications précédentes.
